# EUROPEAN PATENT APPLICATION

(11) **EP 4 190 678 A1**
(43) Date of publication of application: **07.06.2023**
(21) Application number: 22210839.1
(22) Date of filing: 01.12.2022
(51) Int. Cl.: B62K 19/28, B62K 19/04, B62K 19/16

(54) **FRAME REINFORCEMENT ASSEMBLY FOR BICYCLE OR VEHICLE AND METHOD FOR MAKING A FRAME REINFORCEMENT ASSEMBLY**

(30) Priority: 03.12.2021 US 202163285498 P
(71) Applicant: Ohanian, Ara, Doraville, GA 30340 (US)
(72) Inventor: Ohanian, Ara, Doraville, GA 30340 (US)
(74) Representative: Sach, Greg Robert

(57) **Abstract**

The present invention discloses a reinforced bicycle or vehicle frame comprising: a head tube portion for engaging a front fork and wheel; a bottom bracket portion for engaging a rear fork and wheel; a seat tube portion. Each of the head tube portion, the bottom bracket portion, and the seat tube portion being hollow, allowing for the installation of a frame reinforcement assembly to a hollow interior of each of the hollow head tube portion, the bottom bracket portion, and the seat tube portion or entire frame. The frame reinforcement assembly includes a plurality of ribs structure adapted to be approximately be perpendicular to each other. The plurality of ribs structure formed in the hollow interior and being composite material to provide stiffness to the hollow interior of each of the hollow head tube, the bottom bracket, and the seat tube portions.

## Description

### FIELD OF THE DISCLOSURE

The present invention relates to a frame reinforcement assembly for a bicycle or vehicle frame, and, more particularly, to a reinforced bicycle frame or vehicle frame in which strength (rigidity) is reinforced within the bicycle or vehicle frames or any other hollow frames.

### BACKGROUND OF THE DISCLOSURE

Bicycles or vehicles, such as motor bikes or cars, in general, serve as a source of sports, exercise, and other activities in addition to providing transportation. Nevertheless, bicycles or vehicles have been developed and manufactured with a range of features to improve the development capabilities of bicycle or vehicle.

However, with development of superior materials, the demand for the strength and weight of a bicycle or vehicle frame is also expected to be high. For example, there may be a need of frame of a vehicle with novel and distinguishing features to enhance strength or rigidity of the vehicle. Certain examples of frame of vehicles may be readily available such as conventional commuter bicycles that have heavy & inexpensive frames which is appropriate for commuting although they are prone to flexing under heavy pedaling, sport bicycle frames that are made of lighter & more expensive materials such as: aluminum, titanium, carbon fiber, which are designed with strength in mind striving for rigidity thus reducing power loss as the frame flexes under heavy pedaling.

Accordingly, it would be desirable to have a vehicle frame and frame reinforcement assembly for bicycles or vehicles that stiffens the bicycle or vehicle frame to reduce the waste of the pedaling force caused by frame twisting and flexing, particularly in the heavier loaded stress areas.

### SUMMARY OF THE DISCLOSURE

In view of the foregoing disadvantages inherent in the prior art, the general purpose of the present disclosure is to provide a reinforced frame assembly for a bicycle or a vehicle frame, to include all advantages of the prior art, and to overcome the drawbacks inherent in the prior art.

An object of the present invention is to reduce the amount of pedaling force wasted due to frame twisting by stiffening the bicycle frame.

Another object of the present invention is to prevent that distortion thus transferring more of the pedaling force to the drivetrain.

Another object of the present invention is to achieve a bicycle frame that is light, stiff, and durable.

In view of the above objects, in one aspect of the present invention, a frame reinforcement assembly is provided. The frame reinforcement assembly or vehicle frame may include a head tube portion for engaging a front tire, a bottom bracket portion for engaging a rear tire, and a seat tube portion for supporting a seat of a bicycle or vehicle rider. Further, each of the head tube portion, the bottom bracket portion, and the seat tube portion has a hollow interior. The frame reinforcement assembly comprising a plurality of rib structures that may be formed within the hollow interior to provide stiffness to the hollow interior of each of the hollow head tube portion, the bottom bracket portion, and the seat tube portion.

In one form, the plurality of rib structures being perpendicular to each other.

In one form, the plurality of rib structures comprises a first set of rib structures and a second set of rib structures and wherein the first set of rib structures and the second set of rib structures may be aligned to be arranged substantially perpendicular and crossing to each other. Further, the first set of rib structures comprises a plurality of horizontal rib structures and a second set of rib structure comprises a plurality of vertical rib structures.

In one example form, the plurality of rib structures may be one of forged, stamped, welded, soldered, ultrasonically welded, glued (resined), resined, or 3D printed to the inner walls of the hollow interior of the frame.

Further, in one embodiment, at least any of two or three portions, such as the head tube portion, the bottom bracket portion, and the seat tube portion are configured to be coupled at a junction, may be called as a joining junction. The joining junction may also be hollow whereby the plurality of rib structures as described may be arranged.

In one example form, the plurality of rib structures is made of composite material and the composite material comprises carbon fiber, aluminium, glassfiber, fiber, metal, and/or combination thereof.

In one example form, the composite material is a sandwich structure, and wherein the sandwich structure is fabricated by attaching stiff skins to a thick core. The cells of a structure of the thick core present in the composite material comprises one of hexagonal cells, tri-cells, and/or a combination thereof.

In another aspect, the present invention provides a reinforced bicycle or vehicle frame. The reinforced bicycle or vehicle frame may include a head tube portion for engaging a front tire, a bottom bracket portion for engaging a rear tire, and a seat tube portion for supporting a seat of a bicycle or vehicle rider. Further, each of the head tube portion, the bottom bracket portion, and the seat tube portion is hollow that allows installation of a frame reinforcement assembly comprising a plurality of rib structures arranged along the hollow interior of each of the hollow head tube portion, the bottom bracket portion, and the seat tube portion. The plurality of rib structures is of a composite material.

In yet another aspect of the present disclosure, a method for making a frame reinforcement assembly for a bicycle or a vehicle is provided. The method includes: forming a plurality of rib structures within the hollow interior to provide stiffness to the hollow interior of each of a hollow head tube portion, a bottom bracket portion, and a seat tube portion of the bicycle or the vehicle. The plurality of rib structures may be approximately be perpendicular to each other. The plurality of rib structures may be made of a composite material.

The method further includes a joining junction where each of the head tube portion, the bottom bracket portion, and the seat tube portion are configured to be coupled, and wherein the joining junction is also hollow, and wherein forming the plurality of rib structures within the hollow interior includes: arranging the plurality of rib structures within the walls of the joining junction, wherein the plurality of rib structures includes a first set of rib structures, and a second set of rib structure, wherein the first set of rib structures and the second set of rib structures are arranged substantially perpendicular and crossing to each other, and wherein the first set of rib structures includes a plurality of horizontal rib structures, and a second set of rib structure comprises a plurality of vertical rib structures.

In one of the various embodiments, forming the plurality of rib structures within the hollow interior comprises one of: forging the plurality of rib structures within the hollow interior, or stamping the plurality of rib structures within the hollow interior, or welding the plurality of rib structures within the hollow interior, or soldering the plurality of rib structures within the hollow interior, or ultrasonic welding the plurality of rib structures within the hollow interior, or gluing the plurality of rib structures within the hollow interior, or resining the plurality of rib structures within the hollow interior, or 3D printing the plurality of rib structures within the hollow interior.

This together with the other aspects of the present disclosure, along with the various features of novelty that characterize the present disclosure, is pointed out with particularity in the claims annexed hereto and forms a part of the present disclosure. For a better understanding of the present disclosure, its operating advantages, and the specified object attained by its uses, reference should be made to the accompanying drawings and descriptive matter in which there are illustrated exemplary embodiments of the present disclosure.

### BRIEF DESCRIPTION OF THE DRAWINGS

The advantages and features of the present disclosure will become better understood with reference to the following detailed description taken in conjunction with the accompanying drawing, in which:
FIG. 1 illustrates a perspective view showing stress point areas of a bicycle frame, according to embodiments of the present invention disclosed herein;
FIG. 2 illustrates a perspective view of a Computational Fluid Dynamics stress test showing stress points of the bicycle frame, according to embodiments of the present invention disclosed herein;
FIG. 3 illustrates an exterior view of a bottom bracket area having the frame reinforcement assembly, according to embodiments of the present invention disclosed herein;
FIG. 4 illustrates a half-cut view of the bottom bracket area having the frame reinforcement assembly with vertical and horizontal ribs, according to embodiments of the present invention disclosed herein;
FIG. 5 illustrates a selective cut away view of the bottom bracket area having the frame reinforcement assembly with vertical and horizontal ribs, according to embodiments of the present invention disclosed herein;
FIG. 6 illustrates a profile cut-away view of the bottom bracket area having the frame reinforcement assembly, according to embodiments of the present invention disclosed herein;
FIG. 7 illustrates a profile cut-away view of the head tube area having the frame reinforcement assembly, according to embodiments of the present invention disclosed herein; and
FIG. 8A illustrates an assembled view of a composite material, and FIG. 8B illustrates an exploded view of the composite material, according to embodiments of the present invention disclosed herein.

Like reference numerals refer to like parts throughout the description of several views of the drawing.

### DETAILED DESCRIPTION OF THE DISCLOSURE

The exemplary embodiments described herein detail for illustrative purposes are subject to many variations in implementation. The present disclosure provides a reinforced bicycle frame. It should be emphasized, however, that the present disclosure is not limited only to what is disclosed and extends to cover various alternation to the reinforced frame of bicycle. It is understood that various omissions and substitutions of equivalents are contemplated as circumstances may suggest or render expedient, but these are intended to cover the application or implementation without departing from the spirit or scope of the present disclosure.

The terms "a" and "an" herein do not denote a limitation of quantity, but rather denote the presence of at least one of the referenced items.

The terms "having", "comprising", "including", and variations thereof signify the presence of a component.

The present invention discloses a reinforcement assembly for a bicycle or vehicle frame. The bicycle or vehicle frame may include a head tube portion for engaging a front tire, a bottom bracket portion for engaging a rear tire, and a seat tube portion for supporting a seat of a bicycle or vehicle rider. Further, each of the head tube portion, the bottom bracket portion, and the seat tube portion has a hollow interior. The frame reinforcement assembly comprising a plurality of rib structures that may be formed within the hollow interior to provide stiffness to the hollow interior of each of the hollow head tube portion, the bottom bracket portion, and the seat tube portion. The plurality of rib structures may be perpendicular to each other and of a composite material.

Further, a method for making a frame reinforcement assembly 108 for a bicycle or a vehicle is also disclosed. The method comprising: forming a plurality of rib structures within the hollow interior to provide stiffness to the hollow interior of each of a hollow head tube portion, a bottom bracket portion, and a seat tube portion of the bicycle or the vehicle. The plurality of rib structures may be perpendicular to each other and of a composite material. In one of the various embodiments, forming the plurality of rib structures within the hollow interior comprises one of: forging the plurality of rib structures within the hollow interior, or stamping the plurality of rib structures within the hollow interior, or welding the plurality of rib structures within the hollow interior, or soldering the plurality of rib structures within the hollow interior, or ultrasonic welding the plurality of rib structures within the hollow interior, or gluing the plurality of rib structures within the hollow interior, or resining the plurality of rib structures within the hollow interior, or 3D printing the plurality of rib structures within the hollow interior.

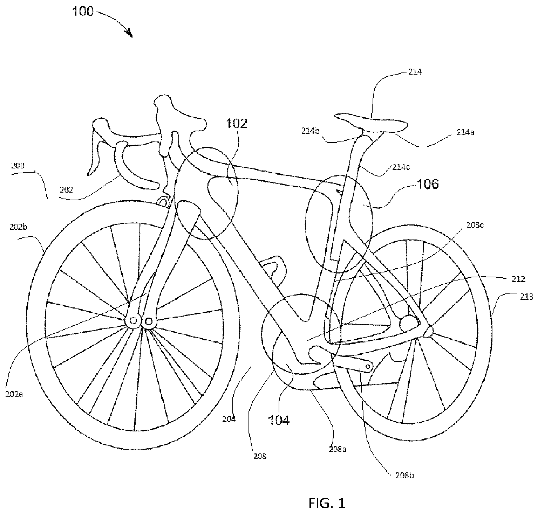

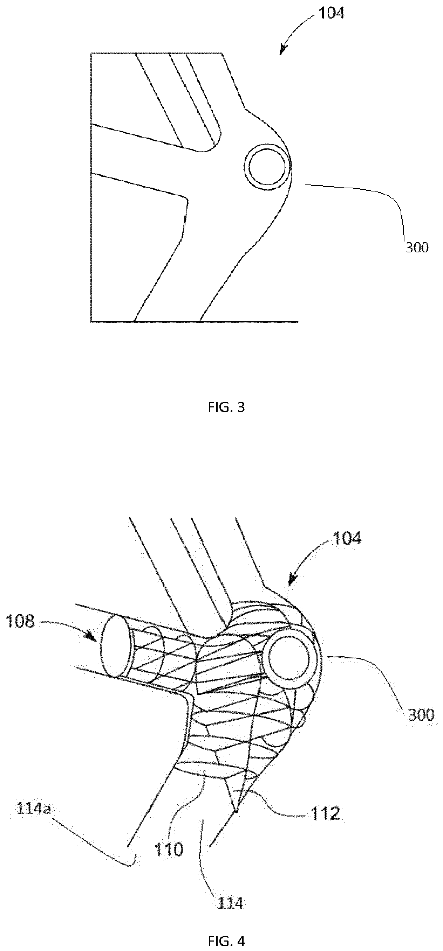

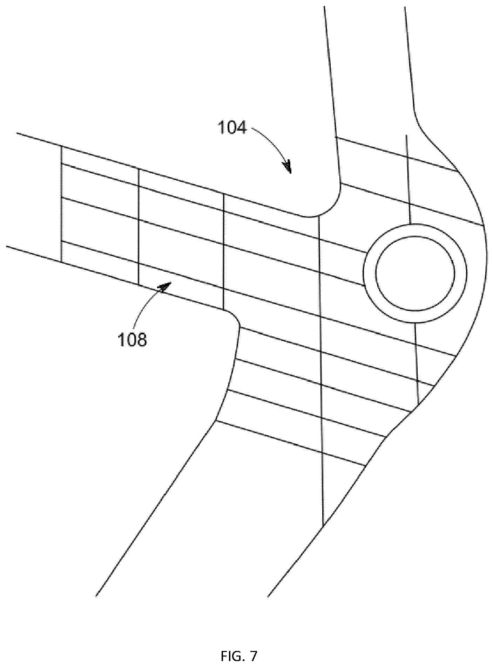

Referring now to FIGS. 1 to 7 to describe a reinforced bicycle frame or a reinforced vehicle frame generally depicted as '100', and to describe a frame reinforcement assembly for the reinforced bicycle frame or for the reinforced vehicle frame 100, generally depicted as '108', as specifically shown in FIGS. 4 to 7. As seen in FIG. 1, the reinforced bicycle frame 100 is depicted and described herein. However, without departing from the scope, the present disclosure also extends to include all the limitation or embodiments described or depicted with respect to a reinforced frame for the bicycle to be extended to, reinforced vehicle frames as well. Herein, it may be considered that all the limitation described with respect reinforced frame or the frame reinforcement assembly shall extend to both, the bicycle frame and the vehicle frame.

As seen in FIG. 1, the reinforced bicycle frame 100 is assembled with a bicycle 200. The reinforced bicycle frame 100 (hereinafter may also referred to as "frame 100" or "reinforced frame 100") is seen to include a head tube portion 102, a bottom bracket portion 104 and a seat tube portion 106. As seen, the head tube portion 102 is adapted to engage with a front fork and wheel assembly 202 of the bicycle 200. Further, the bottom bracket portion 104 is adapted to engage with a bottom bracket and rear fork 204 of the bicycle. Furthermore, the seat tube portion 106 is adapted to engage and support a seat 214 of the bicycle 200 or for that matter a vehicle seat to support the rider of the vehicle, not shown.

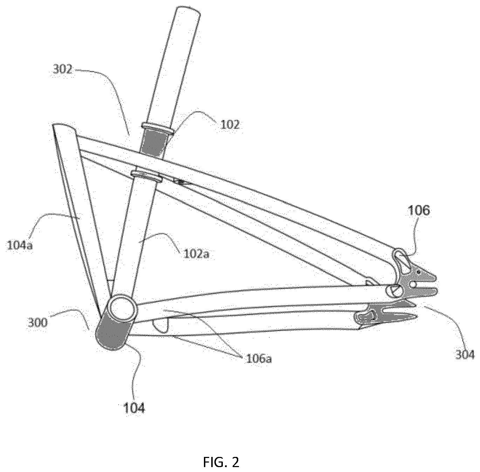

As seen in FIG. 1 the most stressed point areas of the reinforced bicycle frame 100 are the head tube portion 102, the bottom bracket portion 104, and the seat tube portion 106, and FIG. 2 shows a computational fluid dynamics (CFD) test showing stress points of the bicycle frame. As seen in FIG. 2, the most stressed area is a joining junction 300, wherein tubes 102a, 104a, 106a of all the three portions, i.e., the tubes 102a, 104a, 106a of the head tube portion 102, the bottom bracket portion 104, and the seat tube portion 106 are joined. Further stress areas may include a joining junction 302 of tubes 102a, 104a of the head tube portion 102 and the bottom bracket portion 104; and a joining junction 304 of tubes 104a, 106a of the bottom bracket portion 104 and the seat tube portion 106.

Further, the reinforced bicycle frame 100 may comprise a plurality of parts, such as a front fork steerer tube 202a which may be installed within the head tube portion 102. Further, the bottom bracket portion 104 may be connected to the crankset member 208, which may allow the crankset member to freely revolve. The bottom bracket portion 104 may be configured to engage a rear wheel 213. Further, the bottom bracket portion 104 may comprise a spindle 212 that the crankset member 208 attaches to, as well as bearings that allow the crankset member 208 and the spindle 212 to rotate. The crankset member 208 is where the crankset 208a and pedals 208b are attached. The bottom bracket portion 104 may include bearings (not shown) that may be located inside the bottom bracket portion's 104 shell, which may be part of the bicycle frame 100 and joins the seat tube portion 106, a down tube 208c, and the crankset member 208. Further, the seat tube portion 106 may be adapted to support a seat 214 of a bicycle rider. The seat tube portion 106 may help to accommodate the bicycle's seat post 214a, which is connected to a saddle 214b. The saddle 214b height may be adjusted by adjusting the distance between the seat post 214a and a seat tube 214c using a rapid release lever (not shown). The seat post 214a may be inserted to a certain length, which may be indicated by a minimum insertion mark on the seat post 214a. Further, the bicycle's basic framework may comprise a triangular frame, a rear triangular frame, and so forth. Bicycles with a core triangle may be constructed of a high-strength, light-weight metal like titanium, aluminum, carbon fiber tubes, any metal, and so forth.

In an exemplary form, the bicycle's basic framework of the reinforced bicycle frame 100 may be made of large aluminum tubes. In one embodiment, the rear triangular frame, notably the seat tube portion 106 and the crankset member 208 may be made of carbon fiber tubes. Throughout many cases, the head tube portion 102, the bottom bracket portion 104 and the seat tube portion 106 may be made of metal as the metal may be more robust when the wheels being clamped to the bicycle frame 100. The head tube portion 102 may be adapted to engage the front fork steerer tube 202a and a front wheel 202b.

Further, each of the head tube portion 102, the bottom bracket portion 104, and the seat tube portion 106 has a hollow interior 114 to install a frame reinforcement assembly 108, as seen in FIGS. 4 to 7. The frame reinforcement assembly 108 may include a plurality of rib structures 110, 112 formed within the hollow interior 114 to provide stiffness to the hollow interior 114 of each of the hollow head tube portion 102, the bottom bracket portion 104, and the seat tube portion 106.

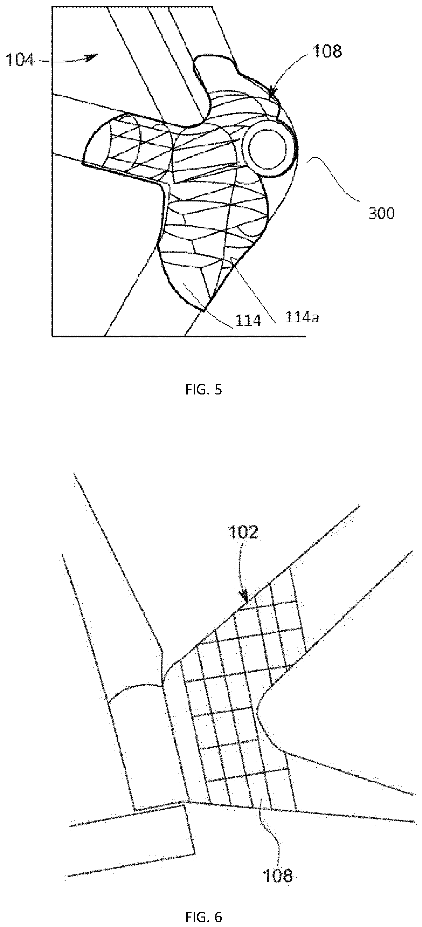

The plurality of rib structures 110, 112 may be reinforcement ribs that may be aligned pointing in the direction of the force(s). In cycling, the pedaling forces are exerted onto the pedals in several directions because the cycling shoe is attached to the pedal with a cleat. This allows the rider to exert pedaling force onto the pedal 360 degrees around the crank. However, most of the larger forces are downward and upward albeit these two forces are roughly 20 degrees difference in direction. In one embodiment, the plurality of rib structures 110, 112 may be perpendicular to each other and made of a composite material. As seen in FIG. 4 and 5, the plurality of rib structures 110,112 may include a first set of rib structures 110, a second set of rib structure 112. The first set of rib structures 110 and the second set of rib structures 112 may be aligned to be arranged substantially perpendicular and crossing to each other. In one example arrangement, the first set of rib structures 110 includes a plurality of horizontal rib structures, and a second set of rib structure 112 comprises a plurality of vertical rib structures. Further, as seen in the FIGS. 4 and 5, the horizontal and vertical rib structures are arranged in a specific pattern. As seen, each vertical rib structure of the plurality of vertical rib structures extends upwardly and downwardly from each of the horizontal rib structure of the plurality of horizontal rib structures, in a spaced relation from adjacent vertical rib structures. Such arrangement of the plurality of vertical rib structures and the plurality of horizontal rib structures in the hollow interior 114 provides rigidity to the bicycle frame 100.

In one example arrangement, such arrangement may be provided along the entire hollow interior 114, or, in another example arrangement, such arrangement may be provided along the joining junctions 300, 302 and 304.

In one example form, the plurality of vertical ribs structure 112 may be made of the composite material. The composite material may comprise a carbon fiber, aluminum, a glass fiber, any fiber, any metal, and so forth. A plurality of sturdy composite material may be preferable, but they are more expensive. If certain factors remain constant, the inner reinforcement provided by the frame reinforcement assembly 108 may improve pedaling efficiency. Further, a plurality of bulkier materials may work, but they might make the reinforced bicycle frame 100 heavier. Along with all the new materials, which may include carbon fiber, better designed reinforced bicycle frame 100 may be feasible. Nevertheless, with the addition of the inner reinforcement by installing the frame reinforcement assembly 108, an already existing bicycle frame 100 may become even better. During the manufacturing process, the frame reinforcement assembly 108 may be integrated inside the reinforced bicycle frame 100. The frame reinforcement assembly 108 may be placed into the existing bicycle. For manufacturing, the plurality of ribs structure 110,112 may have to be formed to the inner walls 114a of the hollow interior 114 or frame by way of forging, stamping, welding, soldering, ultrasonic welding, gluing (resined), resin, 3D printing and so forth.

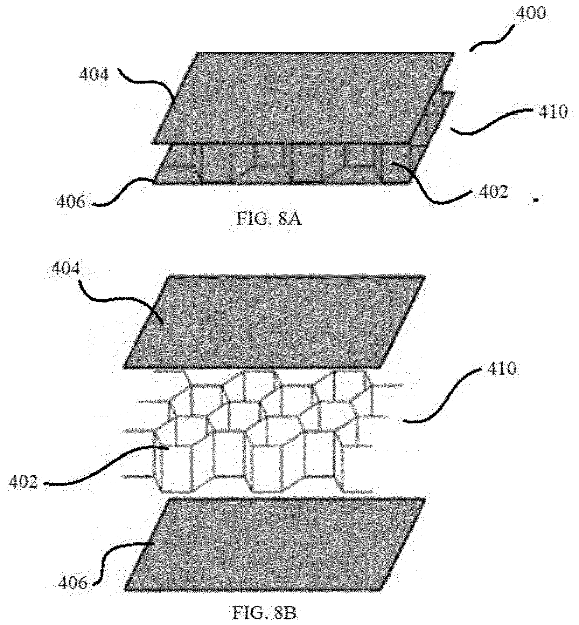

In one example form, as seen in FIGS. 8A and 8B, the composite material 400 comprises a sandwich structure 410. FIG. 8A is an assembled view of the composite material 400, and FIG. 8B is an exploded view of the composite material 400. As seen, the sandwich structure, for example, be a tri-cell or hex-cell 'sandwich structure' 410 that may be utilized for forming the plurality of ribs 110, 112. The sandwich structure 410 may be comprised of a low stiffness, low density inner core 402 enclosed by two stiff skins 404, 406. The sandwich structure 410 may be fabricated by attaching stiff skins 404, 406 to a thick core 402. The stiff skins 404, 406 may be made from carbon fiber or an aerospace grade aluminum. Further, the sandwich structure 410 may balance the externally applied bending moment. In an embodiment of the present invention, cells of a structure of the thick core 402 present in the composite material 400 may include, but not limited to, hexagonal cells, tri-cells, square cells, reinforced hexagon cells, rectangular cells, flex core cells, and so forth.

In an exemplary embodiment of the present invention, since the bottom bracket portion 104, as seen in FIGS. 4, 5, and 7 and the head tube portion 102, as seen in FIG. 6 are the most stressed areas of the bicycle frame during vigorous riding, these portions demand a high level of strength. The head tube portion 102, as seen in FIG. 6 may include rectangular shaped composite material. In another embodiment of the present invention, the head tube portion 102 may include a hexagonal shaped composite material. The bicycle rider applies twisting forces to push themselves forward in these locations.

The foregoing descriptions of specific embodiments of the present disclosure have been presented for purposes of illustration and description. They are not intended to be exhaustive or to limit the present disclosure to the precise forms disclosed, and obviously many modifications and variations are possible in light of the above teaching. The embodiments were chosen and described in order to best explain the principles of the present disclosure and its practical application, and to thereby enable others skilled in the art to best utilize the present disclosure and various embodiments with various modifications as are suited to the particular use contemplated. It is understood that various omissions and substitutions of equivalents are contemplated as circumstances may suggest or render expedient, but such omissions and substitutions are intended to cover the application or implementation without departing from the spirit or scope of the present disclosure.

## Claims

1. A frame reinforcement assembly for a bicycle or vehicle frame having a head tube portion for engaging a front tire, a bottom bracket portion for engaging a rear tire, and a seat tube portion for supporting a seat of a bicycle or vehicle rider, each of the head tube portion, the bottom bracket portion, and the seat tube portion having a hollow interior, the frame reinforcement assembly comprising:
a plurality of rib structures formed within the hollow interior to provide stiffness to the hollow interior of each of the hollow head tube portion, the bottom bracket portion, and the seat tube portion, the plurality of rib structures arranged in relation to each other and, wherein the plurality of rib structures is of a composite material.

2. The frame reinforcement assembly as claimed in claim 1, wherein the plurality of rib structures is one of forged, stamped, welded, soldered, ultrasonically welded, glued (resined), resined, or 3D printed to the inner walls of the hollow interior of the frame.

3. The frame reinforcement assembly as claimed in claim 1, wherein the plurality of rib structures comprises:
a first set of rib structures, and
a second set of rib structure,
wherein the first set of rib structures and the second set of rib structures are aligned to be arranged substantially perpendicular and crossing to each other.

4. The frame reinforcement assembly as claimed in claim 3, wherein the first set of rib structures comprises a plurality of horizontal rib structures, and a second set of rib structure comprises a plurality of vertical rib structures.

5. The frame reinforcement assembly as claimed in claim 1 further comprising a joining junction where at least any of two or three portions, of the head tube portion, the bottom bracket portion, and the seat tube portion are configured to be coupled, and wherein the joining junction is hollow, whereby the plurality of rib structures are arranged,
wherein the plurality of rib structures comprises:
a first set of rib structures, and a second set of rib structure, wherein the first set of rib structures and the second set of rib structures are aligned to be arranged substantially perpendicular and crossing to each other, and
wherein the first set of rib structures comprises a plurality of horizontal rib structures, and a second set of rib structure comprises a plurality of vertical rib structures.

6. The frame reinforcement assembly as claimed in claim 1, wherein the composite material comprises carbon fiber, aluminum, glass fiber, fiber, metal, and/or combination thereof.

7. The frame reinforcement assembly as claimed in claim 1, wherein the composite material being a sandwich structure, and wherein the sandwich structure is fabricated by attaching stiff skins to a thick core.

8. The frame reinforcement assembly as claimed in claim 7, wherein cells of a structure of the thick core present in the composite material comprises one of hexagonal cells, tri-cells, and/or a combination thereof.

9. A reinforced bicycle or vehicle frame comprising:
a head tube portion for engaging a front fork and wheel,
a bottom bracket portion for engaging a bottom bracket and rear fork and wheel,
a seat tube portion for supporting a seat of a bicycle or vehicle rider,
wherein each of the head tube portion, the bottom bracket portion, and the seat tube portion being hollow, allowing for the installation of a frame reinforcement assembly to a hollow interior of each of the hollow head tube portion, the bottom bracket portion, and the seat tube portion, the frame reinforcement assembly having:
a plurality of rib structures arranged along the hollow interior, and, wherein the plurality of rib structures is of composite material to provide stiffness to the hollow interior of each of the hollow head tube portion, the bottom bracket portion, and the seat tube portion.

10. The reinforced bicycle or vehicle frame as claimed in claim 9, wherein the plurality of rib structures is one of forged, stamped, welded, soldered, ultrasonically welded, glued (resined), resined, or 3D printed to the inner walls of the hollow interior of the frame, and,
wherein the plurality of rib structures comprises:
a first set of rib structures, and
a second set of rib structure,
wherein the first set of rib structures and the second set of rib structures are aligned to be arranged substantially perpendicular and crossing to each other,
wherein the first set of rib structures comprises a plurality of horizontal rib structures, and a second set of rib structure comprises a plurality of vertical rib structures.

11. The reinforced bicycle or vehicle frame as claimed in claim 9, wherein the composite material comprises at least one of:
carbon fiber, aluminum, glass fiber, any fiber, any metal, and/or combination thereof; and
a sandwich structure, wherein the sandwich structure being fabricated by attaching stiff skins to a thick core, and wherein cells of a structure of the thick core present in the composite material comprises one of hexagonal cells, tri-cells, and/or a combination thereof.

12. A method for making a frame reinforcement assembly for a bicycle or a vehicle, the method comprising:
forming a plurality of rib structures within the hollow interior to provide stiffness to the hollow interior of each of a hollow head tube portion, a bottom bracket portion, and a seat tube portion of the bicycle or the vehicle, the plurality of rib structures being arranged in relation to , and wherein the plurality of rib structures is of a composite material.

13. The method as claimed in claim 12, wherein the plurality of rib structures comprises: a first set of rib structures, and a second set of rib structure, wherein forming the plurality of rib structures within the hollow interior comprises:
arranging the first set of rib structures and the second set of rib structures to be substantially perpendicular and crossing to each other,
wherein the first set of rib structures comprises a plurality of horizontal rib structures, and a second set of rib structure comprises a plurality of vertical rib structures.

14. The method as claimed in claim 12, wherein forming the plurality of rib structures within the hollow interior comprises one of:
forging the plurality of rib structures within the hollow interior, or
stamping the plurality of rib structures within the hollow interior, or
welding the plurality of rib structures within the hollow interior, or
soldering the plurality of rib structures within the hollow interior, or
ultrasonic welding the plurality of rib structures within the hollow interior, or
gluing the plurality of rib structures within the hollow interior, or
resining the plurality of rib structures within the hollow interior, or
3D printing the plurality of rib structures within the hollow interior.

15. The method as claimed in claim 12, wherein the composite material comprises at least one of:
carbon fiber, aluminum, glassfiber, any fiber, any metal, and/or combination thereof; and
a sandwich structure, and wherein the sandwich structure is fabricated by attaching stiff skins to a thick core, wherein cells of a structure of the thick core present in the composite material comprises one of hexagonal cells, tri-cells, and/or a combination thereof.
